# EUROPEAN PATENT APPLICATION

(11) **EP 2 306 338 A1**
(43) Date of publication of application: **06.04.2011**
(21) Application number: 09425379.6
(22) Date of filing: 28.09.2009
(51) Int. Cl.: G06F 17/30

(54) **Procedure "GIS Postman" for geographic information system with co-update of the geodatebase**

(71) Applicant: E-Technology Masters' srl, 20135 Milano (IT)
(72) Inventor: Biancofiore, Marco, 20149 Milano (IT)

(57) **Abstract**

A new geodatabase schema for network geodatabase, helping people moving on the land to find the exact (X,Y) coordinate of the house of a resident, and to find the best path to reach a resident
The geodatabase is structured to be co-updated by new releases of commercial network and by GIS system users, without loosing the topological connections

A set of WCF web services allow to
- ask the server the exact latitude and longitude coordinates of an address
- ask the server the exact latitude and longitude coordinates of a resident, to be compared to the actual position
- ask the server the best path to reach the house of a resident starting from the actual position

## Description

### 1 Field of Application (Scope)

The general field of application of this patent request is Geographic Information Systems (GIS).

Geographic Information Systems are IT systems used to manage, analyse and visualise geographic information.

Technology Architecture - a GIS uses various technologies, including:
- GIS Server - provides a range of services and is the foundation on which a GIS application developer relies. The most widely used worldwide is the ArcGis Server from ESRI which makes three services available to the developer:
   ○ Maps
   ○ GeoCoding services
   ○ Geo-processing tools
- Development Environment - generally Visual Studio or Java - used to create the application layers which then use the services provided by the GIS server.

The extended GIS Server system This brief description is based on the technology architecture of an ArcGis-based system, but remains generally valid for other GIS servers.

The ArcGis Server is an 'object server'. It manages ArcOjects which are executed on the server and are known as GIS server objects. These software objects can be maps, location references, etc, and are provided as required by the GIS.

The ArcGis Server is part of an extended system made up of multiple components which all request services from it:
- A *web server* hosts web applications that use ArcGis Server objects
- These *applications* are in turn developed in .Net (as is the case with this patent request) or Java as the Application Development Framework
- The *web browser* is used to connect to the web applications which are executed on the Web Server
- The *desktop applications* which connect via http to the ArcGis Web Services published on the web server, or directly to the GIS server via LAN/WAN
- The ArcGis Server objects are then used locally by a series of map editing products (ArcView) or for system management (ArcCatalog)
- Finally, GIS data is accessed and modified using an ArcGis component which manages interaction with the database

### 2 Current state of small scale GIS routing systems

### 2.1 Current situation: commercial databases

Today, street data is collected by specialist companies. The two worldwide market leaders are TeleAtlas and Navtec.

The services and costs of these two providers are broadly comparable.

They provide street data to their clients on digital media. This data is then exported to the local system, generally in RDBMS, as a standard data transfer.

Using the imported data, the client then develops their GIS application:
- In more advanced systems, commercial street usage data are combined with geographical data in the geo-database. This can include, for example, public transport stops. Although the general street data is acquired externally, additional data enrichment is added by the user.
- The GIS system understands geographical maps which use both first level data (purchased externally) and second level data (inserted by users). It is by using a combination of this data that the application provides a service - explaining, for example, the routes and timetabling of public transport systems at street level.
   Commercial networks - specialist companies gather commercial street data through periodic fieldwork, reviewing specific zones at time intervals of 4-5 years.

This method and the quality of the results are strongly affected by:
- Which commercial entities are likely to benefit from the sevice
- The cost of fieldwork and review

The quality of the information and service provided by these specialist companies is inevitably focused on 'large scale routing' which allows users to:
- Locate a particular street in an urban conurbation
- Identify the route from one place to another - normally over longer distances

Unsupported Applications - GIS systems really ought to lend themselves to a large number of applications which rely on 'small scale routing'. This is not possible today using the available commercial networks which lack the necessary degree of detail and granularity.

There are many potential application areas which would be possible if 'small scale' routing were available:
- Improved post and parcel delivery
- Utility meter reading
- Food and beverage distribution to self-service machines
- Refuse and recycling services
- Road surface repair and maintenance

All these application possibilities require a greater degree of reliability, responsiveness and detail than is currently available from existing service providers.

Commercial Network Limitations - in general, the further you move from city centres, the less reliable the information of existing service providers becomes.

The quality of detail is often impossible for them to achieve, simply because it is not cost-effective to gather and compile.

An application designed to improve collection of utility usage data, or postal delivery, or refuse management needs to know
- If there is a secondary street (not actually present in the commercial network) leading to the house of a specific person
- The X,Y co-ordinates of the house.

This information cannot be collected cost-effectively by the commercial providers of street data.

### 2.2 The current state of GIS routing: limitations and a possible solution

Systems at the Limit To create these 'small scale' GIS applications (which cannot readily be found today), one could consider staying with current technology models, and simply increasing the level of detail and relevance of data.

In reality, this is not an option: such an increase would take current systems to the limit and this necessitates a change in the model, both in terms of the process and of at least some of the technologies used.

Small scale geographical data profile To profile the exact address and occupancy details across a country the size of Italy would incur prohibitive costs. If attempted with existing institutional mechanisms, it would pose organisational problems which would be difficult to overcome.

To increase the granularity of the street data (creating, for example, two time profiles for the same area) would increase costs for the commercial service provider to an extent which would price them out of the market.

In reality, the nature of small scale street data differs so much by type and area, that whole segments of information which may be of critical interest to one group of users, would have no relevance at all for another.

A 'Double-Entry' Geo-Database For all of these reasons, there is only one viable solution to acquiring small scale street data: *it must be gathered directly by those who use it.*

In this way, only those who use the individual GIS system carry the burden of cost and additional procedural complexity for the information they need realting to the zones in which they are interested.

How does this work in reality? The agents of a company, for example, contracted to gather usage data by utility companies makes a first pass at profiling the civic addresses using palm PCs, and as they do so, the data is automatically gathered and visualised on the maps.

On the basis of the input information, the system can then trace the route which best encompasses all the necessary touchpoints. This information in turn optimises the next round by the meter-reader.

For companies operating these reading services - especially outside the city centre - it is frequently necessary to modify and correct street data and geo-coding. They frequently find that 'new streets' are not indicated on their maps or indeed that smaller streets and alleys are ignored altogether.

*In conclusion, applications which require small scale routing must be able to co-ordinate and combine information derived from both the macro provider and from the end-users themselves. This complicates the scenario, because it requires that continual updates from two distinct information sources can be cross-checked and aligned.*

This requirement represents a step change in the practical application of GIS systems, and is the subject of this patent request.

Before looking at the subject of the request in more detail, here is a summary of the critical issues affecting small scale routing today.

First critical issue: geo-database models To organise more detailed information the database must be significantly enriched. In today's models, for example, civic registration is limited to four fields in Street Section.

Second critical issue: update procedure The new small scale GIS applications require that data is updated both by the GIS service provider and by the end-user community. In the geo-database, one data class is frequently linked to another - a street number, for example, is linked to the street. The additional or alternative data classes required for small scale GIS applications can create problems for these existing linked data relationships.

Third critical issue: using mobile devices for field profiling Small scale data profiling demands the field use of palm PCs capable of accepting input and sending it directly to the central server. Tools which were once considered peripheral now become central thanks to web service communication.

### 2.3 The lack of a "GIS Postman" procedure

Towards a GIS postman Nowadays who must find people living in a region, moving on the field, can only use his own experience.

The postman has in his mind a great set of knowledges about the land, people, position of street numbers, road optimization,....

But in the future the postman will not exist any more.

In Italy the post service in the future will not be accomplished by a single company owned by the government, but by many companies in competition with each other.

This will generate a strong tendency towards a strong reduction of the costs of the service.

So we must take the knowledge of the postman and bring it in Geographic Information Systems

Which kind of information in a GIS postman ? Not easy to do, as the mind of the postman is much more sophisticated than the information we can store in a geodatabase and than the geoprocessing procedures we can implement in a GIS system

But at least this GIS system should:
- Find a Street Number in a street: this is not easy in Italy outside the cities if we exclude the experience of the postman
- Find a person (Surname and Name) in a small-scale geographic zone with a high level accuracy
- Give suggestions on how to move to find a person in a position on the zone

All these information should be easily modified, as the road network can change and as people can change their address.

Palm enabled A client of this GIS system should be installed on palmtop PC connected to the server, so that the system could be easily used by people moving around the land

### 3 The Invention: the "GIS postman" for a palm pc

### Description of Figures

### Figure 1

II Postman geodatabase: diagramma Entity-Relationship

The Entity-Relationship diagram contains
- The table StreetSegment, primary key Id, StreetSegmentName, Origin, GeoGuid
- The table StreetNumber, primary key Id, StreetNumber, StreetSegmentld (foreign key from StreetSegment.Id ), StreetSegmentName, X coordinate, Y coordinate, Note
- The table Resident, Guid (uniqueidentifier), Surname (varchar), Name (varchar), StreetNumberld (int), (foreign key from StreetNumber.Id ), Note (varchar)
- The table Delivery, Guid (uniqueidentifier), ResidentUid, Date (datetime), Executed (bit)

### Figure 2

The UML class diagram of the Postman Domain Model

The Domain Model contains four classes:
- StreetSegment
- StreetNumber
- Resident
- Delivery

Associations:
- StreetSegment - StreetNumber, association type 1-*
- StreetNumber - Resident, association type 1-*
- Resident - Delivery, association type 1-*

### What it is all about

There are two constituent parts to the invention:
- A new geodatabase, the "postman" geodatabase, with a set of new feature classes supporting all these processes: Street Number, People, Deliverries.
- A set of web services that can be consumed by a palmtop PC connected to the server
   ○ Geocoding, that find a street in the network on a palm client
   ○ Find people, that find people on the network on a palm client
   ○ Path manager, that gets from the server the information on how to reach a defined person on the network

### In detail: the "postman" geo-database

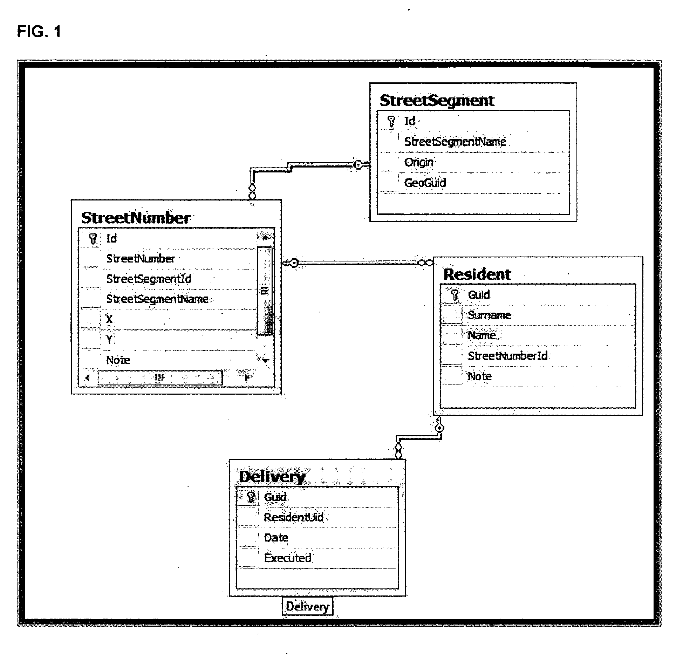

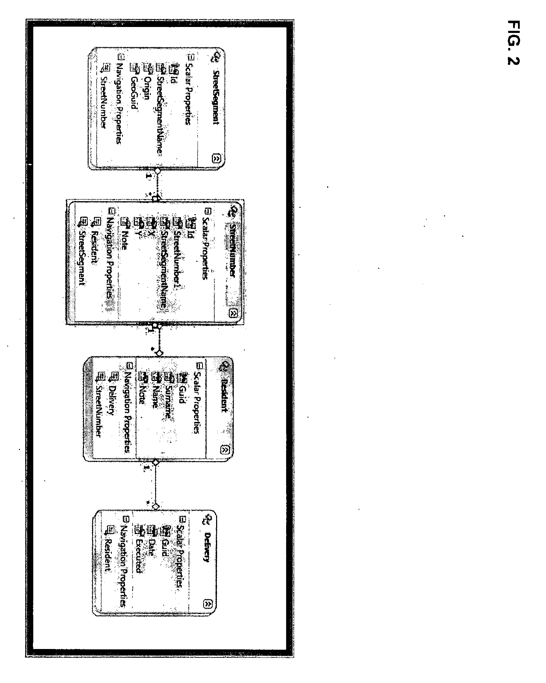

The postman geodatabase is a network geodatabase with a set of other tables. In the attached figure the "Postman Geodatabase", with only few tables

There is a table StreetSegment (StreetSection): here we show only a limited number of columns

The table StreetSegment has a Foreign key in StreetNumber

There is a table Person (Resident). The table StreetNumber has a Foreign key in Person

There is a table StreetSegment has a Foreign key in StreetNumber.

There is a table a Delivery

The table Person has a Foreign key in the table Delivery

Street Numbers First we introduced the feature class Street Numbers

The new feature class has these fields:
- Id
- StreetNumber
- StreetSegmentld
- (NetworkName)
- X
- Y
- Note

X e Y rappresent the X and Y coordinates of the Street Number

These coordinates will by tipically detected by a palmtop PC moving on the land

The field StreetSegmentld plays a central role: it is the Id of the Street Segment the Street Number refers to

The Street Number could also have X,Y coordinates not geometrically overlapped to the Street Segment:

Networkld represents only the Street Section topologically connected to the Street Number, therefore the Street Section we have to go throught to reach the Street Number

Person. Second feature class Person stores the data of Address od people people on the network.
- Guid
- StreetNumberld is the Id of the Street Number the Person refers to
- Surname
- Name
- Note

Deliveries The table delivery stores all the data of the deliveries (done and programmed)
- Guid
- Personld
- Date
- Done
- note

Uml Class diagram In the second figure attached to this document the UML class diagram of the Postman Object Oriented Domain Model

We can see:
1. The street segment class
2. The StreetNumber class
3. The Person class
4. The Delivery class

### In detail: "postman" web services for palm pc

The second part of the invention is a set of web services helping a person moving around on a small-scale zone to find people in a much more efficient way

Web service for Palm pc "Geocoding" This WCF service accepts in input a Street Name and a Street Number, sends them to the server, and obtain
- the Id of the Street, that will be displayed on the palm PC in a different color
- the (X,Y) coordinates of the addess

Web Service for Palm pc "PeopleFinder" This WCF service accepts in input Surname and Name of the person to find on the network, sens them to the server, and obtain a serialized data transfer object containing
- the StreetSection (StreetSegment), that will e displayed in a different color on the palm pc
- the X,Y coordinates of the Street Number, that will be displayed in a different colo on the palm pc

Web Service for Palm pc "Path Manager" This WCF service accepts the current coordinates of the palm pc on the land, accepts a Street Address Id or a Person Surname + Person Name and returns the ordered list of the Street Sections the postman must walk throught to read the place

### Advantages and Benefits

The invention helps people moving on the land to find Addreses and People in a more efficient way

Applications The functions described above have a very large number of applications in GIS applications
- Improved post and parcel delivery
- Utility meter reading
- Food and beverage distribution to self-service machines
- Refuse and recycling services

For the users of these kind of application it is much more efficient to be informed by the small-scale position of a Street Number than to get some references looking at the environment

## Claims

1. A New Geodatabase model "GIS Postman" for GIS application for palm pc **characterized in the fact that** new geodatabase model "Gis Postman" has the new feature class schema whose Entity-Relationship is in the first attached figure, and whose UML diagram is in the second attached figure.
The model is builded-up by four feature classes: these are the base schema of the Postman Domain Model of the new GIS applications helping people moving on the land with palm pc.
The new feature class are: StreetSegment, CivicNumbers, Person, Residents, Deliveries

2. A New Geodatabase model "GIS Postman" for GIS application for palm pc as claimed in claim 1, **characterized in the fact that** the new feature classes have two new columns / properties:
- Origin. It contains information regarding the origin of gegrafical datum wich can: originate with the commercial network and be unaffected by user modifications, or be created by the user or originate with commercial network but be modified by the user
- GeoGuid. the column/property is a geographic unique identifier of an instance of the feature class. It is based on the geographic characteristics and is able to identify an instance from them. This concept has been introduced to allow a feature class to continue to be recognised when a new release of commercial network is issued

3. A New Geodatabase model "GIS Postman" for GIS application for palm pc as claimed in any previous claims, **characterized in the fact that** a new WCF Web service for Palm pc "Geocoding" is provided. This WCF service accepts in input a Street Name and a Street Number, sends them to the server, and obtain
- the Street Segment, that will be displayed on the palm PC in a different color
- the (X,Y) coordinates of the addess

4. A New Geodatabase model "GIS Postman" for GIS application for palm pc as claimed in any previous claims, **characterized in the fact that** a new WCF Web Service for Palm pc "ResidentFinder" is provided. This WCF service accepts in input Surname and Name of the person to find on the network, sens them to the server, and obtain a serialized data transfer object containing
- the StreetSegment of the resident, that will e displayed in a different color on the palm pc
- the X,Y coordinates of the Street Number of the resident, that will be displayed in a different colo on the palm pc

5. A New Geodatabase model "GIS Postman" for GIS application for palm pc as claimed in any previous claims, **characterized in the fact that** a new WCF Web Service for Palm pc "Path Manager" is provided. This WCF service accepts the current coordinates of the palm pc on the land, accepts a Street Address Id or a Person Surname + Person Name and returns the ordered list of the Street Segments the person must walk throught to read the place
